# DEMANDE DE BREVET EUROPEEN

(11) **EP 1 902 930 A1**
(43) Date de publication de la demande: **26.03.2008**
(21) Numéro de dépôt: 07301275.9
(22) Date de dépôt: 26.07.2007
(51) Int. Cl.: B62D 25/14, B62D 27/04, B62D 65/14, F16B 5/02, F16B 13/14

(54) **Partie d'habitacle d'un véhicule automobile avec une structure avant et une pièce de liaison, véhicule automobile correspondant, et procédé de solidarisation d'une pièce de liaison d'un véhicule automobile à une structure avant du même véhicule.**

(30) Priorité: 13.09.2006 FR 0653706
(71) Demandeur: PEUGEOT CITROËN AUTOMOBILES SA, 78140 Vélizy Villacoublay (FR)
(72) Inventeur: Rochereau, David, 78550, MAULETTE (FR)

(57) **Abrégé**

Une partie d'habitacle d'un véhicule automobile comprend une traverse (20) ; une structure avant (18, 22) ; une pièce de liaison (26) reliant la traverse et la structure avant ; des premier (35) et deuxième (34) éléments de solidarisation propres à coopérer ensemble, et reliés à la structure avant (18, 22) et à la pièce de liaison (26).

Un organe de sollicitation élastique (44), disposé à proximité des premier (35) et deuxième (34) éléments de solidarisation, est contraint élastiquement entre la pièce de liaison (26) et la structure avant (18, 22), et applique un effort axial sensiblement constant sur les premier (35) et deuxième (34) éléments de solidarisation.

## Description

La présente invention concerne une partie d'habitacle d'un véhicule automobile comprenant :
- une traverse de planche de bord ;
- une structure avant de véhicule ;
- une pièce de liaison reliant la traverse de planche de bord et la structure ;
- des moyens de solidarisation de la pièce de liaison à la structure comportant au moins un premier élément de solidarisation et un deuxième élément de solidarisation propres à coopérer ensemble, l'un des éléments étant relié à la structure et l'autre des éléments étant relié à la pièce de liaison.

Les véhicules automobiles sont généralement pourvus d'une pièce de liaison fixée entre la traverse de planche de bord et la structure du véhicule, cette pièce de liaison étant communément appelée « liaison de traverse inférieure de baie » ou « liaison TIB ». La liaison de traverse inférieure de baie supporte une partie des efforts et des vibrations de l'ensemble colonne de direction et volant de direction.

Certains systèmes de fixation de la pièce de liaison sur la pièce de structure, généralement le tablier, ne permettent pas de supporter, de manière satisfaisante, les efforts et les vibrations de l'ensemble colonne de direction et volant de direction. Il peut en résulter un relâchement du serrage et, par suite, l'apparition de vibrations dans le volant.

Le problème technique à résoudre est d'améliorer la fixation de la pièce de liaison sur la pièce de structure du véhicule.
A cet effet, l'invention a pour objet une partie d'habitacle d'un véhicule du type précité, caractérisée en ce qu'un organe de sollicitation élastique, disposé à proximité des premier et deuxième éléments de solidarisation, est contraint élastiquement entre la pièce de liaison et la structure avant, et applique un effort axial sensiblement constant sur les premier et deuxième éléments de solidarisation.

Selon d'autres modes de réalisation :
- le premier élément comprend une capsule chimique de scellement, et le deuxième élément comprend un organe mâle de perforation de la capsule chimique, la capsule étant prévue pour déclencher un scellement chimique de l'organe de perforation par rapport à la capsule lors d'un mouvement d'avance de la pièce de liaison vers sa position en butée sur la structure avant ;
- l'organe de sollicitation élastique est coaxial à l'organe de perforation ;
- l'organe de sollicitation élastique est un ressort de compression (44), ou est constitué d'au moins une rondelle tronconique;
- l'organe de perforation comprend un premier épaulement apte à servir d'appui à la pièce de liaison et un deuxième épaulement apte à servir d'appui à l'organe de sollicitation;
- l'organe de sollicitation élastique est solidaire de l'organe de perforation ;
- la traverse de planche de bord comprend un support de colonne de direction reliant la traverse de planche de bord à la pièce de liaison, et en ce que la structure avant comprend une traverse inférieure de baie et un tablier.

L'invention a également pour objet un véhicule comportant une partie d'habitacle telle que définie précédemment.
L'invention a également pour objet un procédé de solidarisation d'une pièce de liaison d'un véhicule automobile à une structure avant du même véhicule automobile, la pièce de liaison étant reliée à une traverse de planche de bord, le procédé comprenant les étapes consistant à :
- relier un premier élément de solidarisation à l'un des organes parmi la pièce de liaison et la structure avant ;
- relier un deuxième élément de solidarisation à l'autre des organes parmi la pièce de liaison et la structure avant ;
- disposer un organe de sollicitation élastique à proximité du premier élément de solidarisation et du deuxième élément de solidarisation, entre la pièce de liaison et la structure avant ;
- appliquer entre le premier élément de solidarisation et le deuxième élément de solidarisation un effort axial qui contraint l'organe de sollicitation élastique, et
- fixer en position le premier élément de solidarisation par rapport au deuxième élément de solidarisation.

L'invention et ses avantages seront mieux compris à la lecture de la description qui va suivre, donnée uniquement à titre d'exemple, et faite en se référant aux dessins annexés sur lesquels :
- la figure 1 est une vue schématique partielle en coupe verticale, montrant une partie d'habitacle d'un véhicule automobile selon l'invention avant assemblage et fixation,
- la figure 2 est une vue schématique semblable à la figure 1 montrant les mêmes éléments après fixation,
- la figure 3 est une vue schématique en coupe verticale à échelle agrandie du détail III de la figure 2 montrant un organe de perforation selon un mode de réalisation préféré.

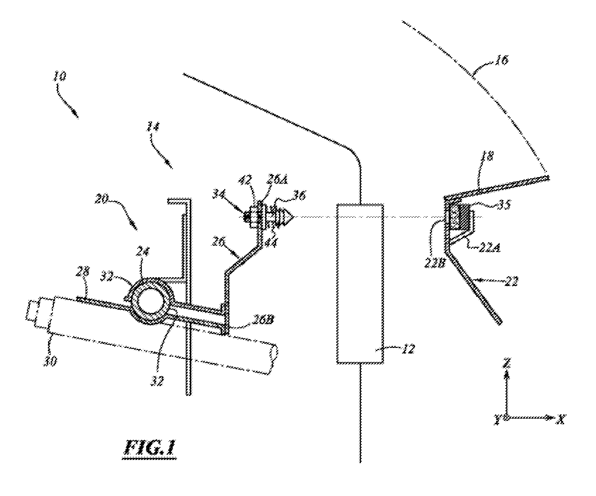

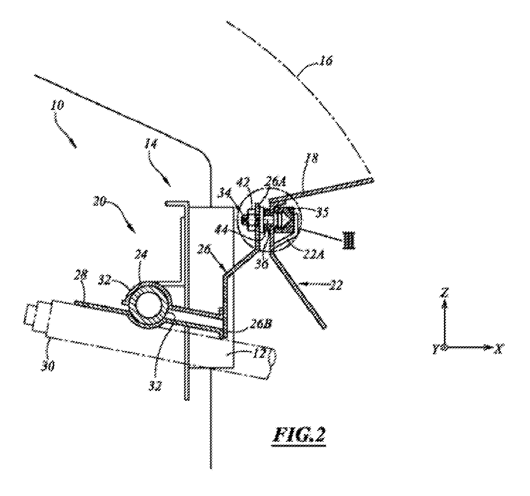

Sur les figures 1 et 2, est reporté le système d'axe X, Y, Z, définissant l'orientation classique d'un véhicule, et dans lequel :
- l'axe X est l'axe longitudinal du véhicule, orienté d'arrière en avant,
- l'axe Y est l'axe transversal, orienté de gauche à droite, et
- l'axe Z est l'axe vertical, orienté du bas vers le haut.

Dans la description qui va suivre, tous les termes d'orientation et de position s'entendent par rapport à ce système d'axe X, Y, Z.

Sur la figure 1, est représentée partiellement la structure intérieure 10 d'un habitacle avant de véhicule automobile comportant des montants avant latéraux 12 (seul le montant gauche est représenté sur les figures 1 et 2) et un bloc structurel 14 s'étendant transversalement entre les montants avant 12. Le bloc structurel 14 est disposé en arrière d'une ouverture de pare-brise 16 (représenté en traits mixtes sur les figures 1 et 2). L'ouverture de pare-brise est elle-même ménagée dans la structure du véhicule. Le bloc structurel 14 comporte une traverse inférieure de baie (TIB) 18, s'étendant sensiblement transversalement, ainsi qu'une traverse de planche de bord 20 et un tablier 22 s'étendant tous deux également transversalement. La traverse de planche de bord 20 est un ensemble autonome propre à être assemblé et fixé à la traverse inférieure de baie 18.

La traverse inférieure de baie 18 est constituée d'une poutre soudée aux montants avant 12 et s'étend sensiblement le long d'un bord inférieur et avant de l'ouverture du pare-brise 16. La traverse inférieure de baie 18 et la traverse de planche de bord 20 sont sensiblement parallèles entre elles, la traverse de planche de bord 20 étant décalée vers l'arrière par rapport à la traverse inférieure de baie 18.

Le tablier 22, comprenant un logement 22A en regard d'un orifice 22B, est disposé sensiblement sous la traverse inférieure de baie 18 et relie cette dernière au plancher du véhicule. La traverse de planche de bord 20 comprend une poutre 24 , par exemple en forme de tube métallique 32 à section circulaire, les extrémités de la poutre de planche de bord 24 étant à fixer aux montants avant 12 du véhicule. Une pièce de liaison 26 de traverse inférieure de baie 18 relie la traverse de planche de bord 20 à la traverse inférieure de baie 18. Un support 28, faisant partie de la traverse de planche de bord 20, supporte une colonne de direction 30 représentée en traits mixtes sur les figures 1 et 2.

La pièce de liaison 26 de traverse inférieure de baie a une section verticale en forme de manivelle disposée sensiblement verticalement. Cette pièce de liaison 26 est destinée à former une entretoise sensiblement longitudinale entre la traverse de planche de bord 20 et la traverse inférieure de baie 18, et à rigidifier la traverse de planche de bord 20 dans la direction verticale. Elle relie le support 28 de la colonne de direction 30 et la partie supérieure du tablier 22.

La pièce de liaison 26 est située à distance transversalement des montants 12, tout en étant décalée du côté du montant gauche. Elle se situe transversalement sensiblement en regard de la colonne de direction 30 du véhicule automobile.

Des moyens 32 positionnent et maintiennent le support 28 de colonne de direction 30 par rapport à la poutre 24 de la traverse de planche de bord 20. Des moyens de type connu, tel que le soudage, solidarisent l'extrémité inférieure ou arrière 26B de la pièce de liaison 26 au support 28 de colonne de direction 30 (voir figure 1) ou à la poutre de la planche de bord (non représenté).

Des moyens 34, 35 solidarisent l'extrémité supérieure ou avant 26A de la pièce de liaison 26 à la partie supérieure du tablier 22. Ils comprennent un organe mâle de perforation 34, et une capsule chimique 35, cette dernière comprenant initialement deux composants dont le mélange conduit à la formation d'un amalgame durcissant.

Afin d'assurer la réparabilité de la structure, un démontage en service de maintenance doit rester possible. Dans le mode de réalisation représenté aux figures 1 à 3, l'organe de perforation 34 comporte deux parties distinctes.

La première partie de l'organe de perforation 34 présente la forme d'un clou comportant un corps 36 en forme de tige s'étendant longitudinalement, et muni, à une extrémité, d'une tête de perforation 37 en forme de pointe et, à l'autre extrémité, d'un filetage 38.

Le corps 36 comprend en outre, en partie intermédiaire, une collerette 39, s'étendant radialement extérieurement depuis la tige, et présentant une première face 39A, sensiblement perpendiculaire à l'axe longitudinal de la tige 36 et tournée vers le filetage 38, et une deuxième face 39B sensiblement parallèle à la première face 39A et tournée vers la tête de perforation 37.

La tête de perforation 37 comporte un profil de perforation en pointe apte à perforer la capsule chimique 35. Le profil est pourvu d'une pluralité d'étages 40 assurant l'ancrage de la tête 37 dans la capsule chimique 35. Chaque étage 40 est constitué d'un cône ou tronc de cône 40A et d'une face arrière 40B, l'étage disposé à l'extrémité libre de la tête de perforation 37 comprenant un cône entier, les autres étages comprenant un tronc de cône.

La seconde partie de l'organe 34 comprend un écrou 42, présentant un taraudage apte à coopérer avec le filetage 38 de la tige 36.

Un organe de sollicitation élastique 44 est disposé à l'interface de la pièce de liaison 26 et du tablier 22, et à proximité des moyens de solidarisation 34 et 35. Il est apte à solliciter élastiquement la pièce de liaison 26 et le tablier 22 en tendant à les éloigner l'un de l'autre.

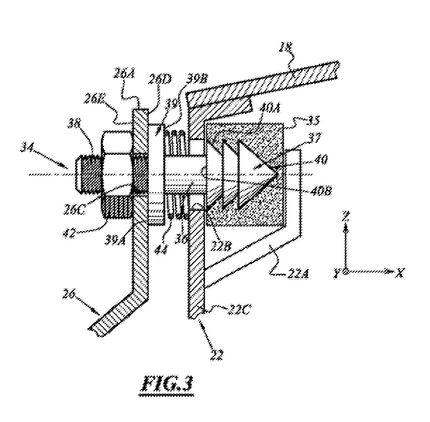

Dans le mode de réalisation représenté à échelle agrandie à la figure 3, l'organe de sollicitation élastique prend la forme d'un ressort hélicoïdal de compression 44, dont l'une des spires d'extrémité est apte à prendre appui sur la pièce de liaison 26. L'autre des spires d'extrémité est apte à prendre appui sur le tablier 22.

De préférence, le ressort de compression 44 est coaxial à la tige 36 de l'organe de perforation 34, et prend appui sur la deuxième face 39B de la collerette 39 de la tige 36.

De préférence également, et afin de faciliter le montage qui sera décrit ultérieurement, la spire d'extrémité du ressort de compression 44, en appui sur la collerette 39, est solidaire de celle-ci par l'intermédiaire de tout moyen approprié connu de fixation.

L'effort axial développé au niveau de l'interface de la pièce de liaison 26 et du tablier 22 est ainsi fonction de la raideur du ressort et de son degré de compression.

Dans un mode de réalisation non représenté, le ressort de compression 44 est remplacé par au moins une rondelle tronconique. Ce type de ressort est fréquemment utilisé lorsqu'on souhaite une faible flexibilité sous forte charge. Dans le cas où plusieurs rondelles sont associées, celles-ci sont empilées soit dans une configuration « en paquets » dans le même sens, soit dans une configuration en opposition, soit en combinant les deux configurations précédentes.

Ces diverses configurations permettent d'obtenir des ressorts aux caractéristiques presque linéaires, en ajustant facilement la raideur d'un empilement contenant un nombre suffisamment important de rondelles.

La séquence de montage va maintenant être décrite.

La planche de bord 20 est préparée soit sur une ligne secondaire de montage, soit dans les ateliers d'un fournisseur. La tige 36 de l'organe de perforation 34 est montée, d'avant en arrière, à travers un orifice 26C de l'extrémité supérieure ou avant 26A de la pièce de liaison 26. Ainsi, la première face 39A de la collerette 39 est amenée en appui sur la face avant 26D de l'extrémité supérieure ou avant 26A de la pièce de liaison 26, c'est-à-dire la face tournée vers le tablier 22. L'écrou 42 est ensuite vissé sur le filetage 38 de la tige 36 jusqu'à venir en contact de la face arrière 26E de l'extrémité supérieure ou avant 26A de la pièce de liaison 26, c'est-à-dire la face tournée à l'opposée du tablier 22. Le couple de serrage requis est alors appliqué entre la tige 36 et l'écrou 42 de manière à rendre l'organe de perforation 34 totalement solidaire de la pièce de liaison 26. Pour la simplicité du montage, l'organe de sollicitation élastique 44 est, comme décrit précédemment, de préférence solidaire de l'organe de perforation 34.

La planche de bord prête au montage, appelé aussi poste de conduite intégré, est livrée en ligne principale de montage. La capsule chimique 35 est insérée, sur chaîne, dans le logement 22A du tablier 22.

En cours d'assemblage du poste de conduite intégré sur la structure du véhicule (Figure 2), la fixation du poste de conduite intégré est assuré par trois points principaux. D'abord, les fixations latérales sur chacun des montants 12 sont réalisées. Simultanément au mouvement d'avance du poste de conduite intégrée, l'organe de sollicitation élastique 44 est contraint en compression entre la pièce de liaison 26 et le tablier 22. Il compense ainsi les intervalles de tolérances de la chaîne de cotes entre la pièce de liaison 26 et le tablier 22.

Toujours simultanément au mouvement d'avance du poste de conduite intégrée, l'organe de perforation 34 traverse l'orifice 22B et perforant la capsule chimique 35. Cette perforation conduit au mélange chimique des deux composants, et à la formation d'un amalgame durcissant en quelques secondes. Ainsi, le scellement chimique de l'organe de perforation par rapport à la capsule est réalisé automatiquement lors du mouvement d'avance de la planche au cours du montage.

L'effort axial du troisième point de fixation, constitué par les moyens de solidarisation 34 et 35, et exercé au niveau du tablier 22, est la résultante des deux fixations latérales. Le moyen de sollicitation élastique 44 étant taré, un effort de serrage axial constant est appliqué au niveau de ce troisième point de fixation.

Grâce à l'invention, la traverse de planche de bord 20 et, plus particulièrement, le support 28 de colonne de direction 30, est fixée de manière plus fiable au tablier 22 du véhicule, entraînant une réduction sensible des vibrations sur le volant de direction.

## Revendications

1. Partie d'habitacle d'un véhicule automobile comprenant :
- une traverse de planche de bord (20);
- une structure avant (18, 22) de véhicule;
- une pièce de liaison (26) reliant la traverse de planche de bord et la structure (18,22) ;
- des moyens de solidarisation de la pièce de liaison (26) à la structure (18, 22) comportant au moins un premier élément de solidarisation (35) et un deuxième élément de solidarisation (34) propres à coopérer ensemble, l'un des éléments étant relié à la structure (18, 22) et l'autre des éléments étant relié à la pièce de liaison (26),
**caractérisée en ce qu'**un organe de sollicitation élastique (44), disposé à proximité des premier (35) et deuxième (34) éléments de solidarisation, est contraint élastiquement entre la pièce de liaison (26) et la structure avant (18, 22), et applique un effort axial sensiblement constant sur les premier (35) et deuxième (34) éléments de solidarisation.

2. Partie d'habitacle selon la revendication 1, **caractérisée en ce que** le premier élément comprend une capsule chimique de scellement (35), et le deuxième élément comprend un organe mâle de perforation (34) de la capsule chimique (35), la capsule (35) étant prévue pour déclencher un scellement chimique de l'organe de perforation (34) par rapport à la capsule (35) lors d'un mouvement d'avance de la pièce de liaison (26) vers sa position en butée sur la structure avant (18, 22).

3. Partie d'habitacle selon la revendication 2, **caractérisée en ce que** l'organe de sollicitation élastique (44) est coaxial à l'organe de perforation (34).

4. Partie d'habitacle selon l'une quelconque des revendications 1 à 3, **caractérisée en ce que** l'organe de sollicitation élastique est un ressort de compression (44), ou est constitué d'au moins une rondelle tronconique.

5. Partie d'habitacle selon l'une quelconque des revendications 2 à 4, **caractérisée en ce que** l'organe de perforation comprend un premier épaulement (39A) apte à servir d'appui à la pièce de liaison (26) et un deuxième épaulement (39B) apte à servir d'appui à l'organe de sollicitation (44).

6. Partie d'habitacle selon l'une quelconque des revendications 2 à 5, **caractérisée en ce que** l'organe de sollicitation élastique (44) est solidaire de l'organe de perforation (34).

7. Partie d'habitacle selon l'une quelconque des revendications 1 à 6, **caractérisée en ce que** la traverse de planche de bord (20) comprend un support (28) de colonne de direction (30) reliant la traverse de planche de bord (20) à la pièce de liaison (26), et **en ce que** la structure avant (18, 22) comprend une traverse inférieure de baie (18) et un tablier (22).

8. Véhicule automobile comportant une partie d'habitacle selon l'une quelconque des revendications 1 à 7.

9. Procédé de solidarisation d'une pièce de liaison d'un véhicule automobile à une structure avant (18, 22) du même véhicule, la pièce de liaison (26) étant reliée à une traverse de planche de bord (20), le procédé comprenant les étapes consistant à :
- relier un premier élément de solidarisation (35) à l'un des organes parmi la pièce de liaison (26) et la structure avant (18, 22) ;
- relier un deuxième élément de solidarisation (34) à l'autre des organes parmi la pièce de liaison (26) et la structure avant (18, 22) ;
- disposer un organe de sollicitation élastique (44) à proximité du premier élément de solidarisation (35) et du deuxième élément de solidarisation (34), entre la pièce de liaison (26) et la structure avant (18, 22);
- appliquer entre le premier élément de solidarisation (35) et le deuxième élément de solidarisation (34) un effort axial qui contraint l'organe de sollicitation élastique (44), et
- fixer en position le premier élément de solidarisation (35) par rapport au deuxième élément de solidarisation (34).
